# EUROPÄISCHE PATENTSCHRIFT

(11) **EP 3 671 517 B1**
(45) Veröffentlichungstag und Bekanntmachung des Hinweises auf die Patenterteilung: **01.12.2021**
(21) Anmeldenummer: 19216826.8
(22) Anmeldetag: 17.12.2019
(51) Int. Cl.: G06F 21/64, G06Q 20/14, G06F 21/10, G06Q 20/32, G06Q 20/40

(54) **SYSTEM UND VERFAHREN ZUR BEZAHLUNG VON DIENSTLEISTUNGEN**
SYSTEM AND METHOD FOR PAYING FOR SERVICES
SYSTÈME ET PROCÉDÉ DE PAIEMENT DE SERVICES

(30) Priorität: 19.12.2018 DE 102018132994
(43) Veröffentlichungstag der Anmeldung: 24.06.2020
(73) Patentinhaber: Francotyp-Postalia GmbH, 13089 Berlin (DE)
(72) Erfinder: HEINRICH, Clemens, 16515 Oranienburg (DE); ROSENAU, Dirk, 13469 Berlin (DE); GÜNTHER, Stephan, 16548 Glienicke (DE); HÜBLER, Uwe, 15366 Neuenhagen (DE)
(74) Vertreter: Hertin und Partner Rechts- und Patentanwälte PartG mbB

(56) Entgegenhaltungen:
- EP-A1- 3 365 633
- WO-A1-2017/119817
- US-A1- 2004 076 298
- US-A1- 2011 125 657
- US-A1- 2012 143 750
- US-A1- 2014 279 463

## Beschreibung

Die Erfindung betrifft ein System und ein Verfahren zur Bezahlung von Dienstleistungen, wobei das System eine Systemkomponente, eine Erfassungseinrichtung und ein Sicherheitsmodul umfasst.

### Stand der Technik:

Es besteht in der Wirtschaft ein dringender Bedarf nach sicheren Bezahlmethoden, um beispielsweise Dienstleistungen oder zählbare Mengen eines physischen oder virtuellen Guts bezahlen zu können, insbesondere im gewerblichen B2B-Bereich, d.h. unter Unternehmen. Dadurch kommt den bereitzustellenden Bezahlmethoden aufgrund der großen Zahlungsbeträge eine große wirtschaftliche Bedeutung zu, die mit einem besonders hohen Anforderungsgrad an die Sicherheit der Bezahlung verbunden ist.

Aus WO 2017/119817 ist ein Verfahren bekannt, den Wert eines Betriebsparameters der Systemkomponente zu erfassen und an ein Sicherheitsmodul zu senden, das eine Abrechnungsinformation erzeugt.

Es ist daher Aufgabe der vorliegenden Erfindung, eine besonders sicheres Bezahlsystem und Bezahlverfahren bereitzustellen, die den besonders hohen Sicherheitsanforderungen im gewerblichen Bereich bei Übermittlung großer Geldbeträge entsprechen. Das bereitzustellende System und das bereitzustellende Verfahren sollen insbesondere technisch einfach für Unternehmen als mögliche Kunden und Abnehmer in bestehende Systeme zu implementieren sein und auch für die Kunden der Unternehmen unkompliziert zu handhaben sein, so dass das Bezahlsystem und - verfahren gut akzeptiert und gerne angewendet werden.

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist ein System zur Bezahlung von Dienstleistungen vorgesehen, wobei das System eine Systemkomponente, eine Erfassungseinrichtung und ein Sicherheitsmodul umfasst. Das System ist dadurch gekennzeichnet, dass die Erfassungseinrichtung dazu eingerichtet ist, einen für einen Zustandsparameter und einen Betriebsparameter der Systemkomponente repräsentativen Erfassungswert zu erfassen und an das Sicherheitsmodul zu senden, wobei das Sicherheitsmodul in Abhängigkeit von den Erfassungswerten eine Abrechnungsinformation erzeugt.

In einem zweiten Aspekt betrifft die Erfindung ein Verfahren zur Bezahlung von Dienstleistungen, das die folgenden Schritte umfasst:
a) Bereitstellung eines Systems umfassend eine Systemkomponente, eine Erfassungseinrichtung und ein Sicherheitsmodul, wobei die Systemkomponente von einem Zustandsparameter und einem Betriebsparameter beschrieben wird,
b) Erfassen des für einen Zustandsparameter und einen Betriebsparameter repräsentativen Erfassungswerts durch die Erfassungseinrichtung,
c) Übermittlung der Erfassungswerte durch die Erfassungseinrichtung an das Sicherheitsmodul,
d) Erzeugung einer Abrechnungsinformation in Abhängigkeit von den Erfassungswerten durch das Sicherheitsmodul.

Die Definitionen, vorteilhafte Wirkungen und überraschende Vorteile der Erfindung, die hinsichtlich des vorgeschlagenen Systems beschrieben werden, gelten für das vorgeschlagene Verfahren analog, und umgekehrt. Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. So kann auf die Offenbarung zu den einzelnen Erfindungsaspekten stets wechselseitig Bezug genommen werden.

Die Komponenten des Systems sind insbesondere zur Datenverarbeitung eingerichtet, wobei die Komponenten des Systems Mittel umfassen bzw. dafür konfiguriert/eingerichtet sind die beschriebenen Verfahrensschritte auszuführen.

Eine wesentliche Idee, die der Erfindung zugrunde liegt, besteht darin, dass ein Sicherheitsmodul eine Abrechnungsinformation generiert, wobei für einen Dienst bezahlt wird, der vorzugsweise darin besteht, dass ein Grenzwert oder mehrere Grenzwerte für einen oder mehrere Zustandsparameter des Systems oder einer Systemkomponente eingehalten werden.

Es ist im Sinne der Erfindung bevorzugt, dass die Erfassungseinrichtung mindestens einen Sensor oder eine Sensorsystem umfasst. Die Sensoren der Erfassungseinrichtung sind dazu eingerichtet, einen für einen Zustandsparameter und/oder Betriebsparameter der Systemkomponente repräsentativen Erfassungswert zu erfassen und an das Sicherheitsmodul zu senden. Es ist im Sinne der Erfindung, dass die Zustandsparameter beziehungsweise der entsprechende Erfassungswert diejenigen Parameter beschreiben, die von außen auf das System, dessen Komponente oder die Arbeitsstation einwirken. Dabei kann es sich zum Beispiel um eine Temperatur in einem Raum handeln, in dem die Arbeitsstation aufgestellt ist. Es kann sich zum Beispiel auch um eine Luftfeuchte, einen Umgebungsdruck, eine Tageszeit, eine Helligkeit usw. handeln, ohne darauf beschränkt zu sein. Ein Betriebsparameter beschreibt dagegen bevorzug eine interne Größe, wie beispielsweise die Betriebstemperatur.

Es kann im Sinne der Erfindung bevorzugt sein, dass die Erfassungseinrichtung insbesondere als Sicherheitseinrichtung fungiert und dass das vorgeschlagene System vorzugsweise mehrere Sicherheitseinrichtungen umfasst, die miteinander beziehungsweise untereinander kommunizieren können. Es ist ganz besonders bevorzugt, dass die Sicherheitseinrichtungen der Arbeitsstationen miteinander ein Kommunikationsnetzwerk bilden, in dem Informationen ausgetauscht werden können. Es ist ganz besonders bevorzugt, dass der Informationsaustausch und die Kommunikation in dem Kommunikationsnetzwerk, das vorzugsweise Bestandteil des vorgeschlagenen Systems ist, sicher erfolgt, d.h. den Anforderungen an eine Sicherheit gemäß dem FIPS-Standard genügt.

Es ist im Sinne der Erfindung, dass die innerhalb des vorgeschlagenen Systems ermittelten Parameter, die die aktuellen Zustände innerhalb des Systems beziehungsweise die aktuellen Zustände der Arbeitsstationen beschreiben, als Betriebsparameter bezeichnet werden. Die Betriebsparameter der Systemkomponente beschreiben vorzugsweise den aktuellen Zustand des Systems oder einer Arbeitsstation, die mit der entsprechenden Erfassungseinrichtung zusammenwirkt.

Vorteilhafterweise können das vorgeschlagene Bezahlsystem beziehungsweise das vorgeschlagene Bezahlverfahren dafür verwendet werden, eine sichere, verbrauchsabhängige Bezahlung von Leistungen oder Materialien zu ermöglichen. Beispielsweise kann das vorgeschlagene Bezahlsystem beziehungsweise das vorgeschlagene Bezahlverfahren zur Abrechnung einer Reinraumlüftung genutzt werden. Früher war es üblich, dass ein Nutzer, der eine Lüftung für einen Reinraum in Anspruch nehmen wollte, dem Anbieter eines entsprechenden Systems eine Gebühr für die Überlassung und/oder Aufstellung des Systems oder der Lüftungsvorrichtung zahlte. Heute besteht aber ein vermehrtes Interesse daran, die Inanspruchnahme solcher Dienstleistungen in Abhängigkeit von einem konkreten Verbrauch eines Nutzers abzurechnen. Dies ist beispielsweise darauf zurückzuführen, dass Anreize für ein ressourcenschonendes Verbrauchsverhalten gegeben werden sollen oder dass die im Rahmen der verbrauchsabhängigen Abrechnung erhobenen Daten für eine weitere Auswertung zur Verfügung stehen sollen. Eine solche weitere Auswertung kann beispielsweise im Rahmen einer *predictive maintenance* dazu verwendet werden, um vorherzusagen, wann ein System das nächste Mal gewartet werden muss oder um im Rahmen eines Benchmarking-Prozesses unterschiedliche, aber im Wesentlichen ähnliche Anlagen miteinander zu vergleichen, um Abweichungen von einem Soll- oder Durchschnittsverhalten oder -verbrauchswerten zu ermitteln. Diese vorteilhaften Wirkungen werden insbesondere dadurch erreicht, dass die Erfassungseinrichtung einen für einen Betriebs-und/oder Zustandsparameter der Systemkomponente repräsentativen Erfassungswert erfasst und an das Sicherheitsmodul sendet, wobei das Sicherheitsmodul in Abhängigkeit von dem Erfassungswert eine Abrechnungsinformation erzeugt.

Bei dem oben genannten Beispiel, bei dem das vorgeschlagene Bezahlsystem beziehungsweise das vorgeschlagene Bezahlverfahren in Zusammenhang mit der Abrechnung einer Reinraumlüftung eingesetzt werden, kann es beispielsweise bevorzugt sein, dass bei Betrieb der Reinraumlüftung das Volumen, d.h. die Menge, an umgesetzter Luft erfasst und abgerechnet wird. Es kann auch bevorzugt sein, dass ein Energieverbrauch der Lüftung durch die Erfassungseinrichtung des vorgeschlagenen Systems ermittelt und an die Sicherheitseinrichtung weitergeleitet wird, in der die entsprechende Abrechnungsinformation erzeugt wird.

Der besondere Vorteil der vorgeschlagenen Erfindung besteht insbesondere darin, dass die entsprechenden Daten zwischen den Systemkomponenten "sicher" im Sinne der Erfindung ausgetauscht werden, nämlich beispielsweise unter Verwendung von FIPS-zertifizierten Sicherheitseinrichtungen oder Systemkomponenten und/oder durch die Verwendung einer dem Fachmann bekannten Public-Key-Infrastruktur (PKI). Dies ist vor allem bei Bezahlverfahren und Bezahlsystemen besonders wichtig, da solche Systeme und Verfahren von den Nutzern nur dann akzeptiert und angenommen werden, wenn sie sicher und zuverlässig arbeiten und ein Missbrauch, ein unerwünschter Datenverlust, ein öffentlich-Werden der Bezahltransaktionen oder eine Manipulation ausgeschlossen sind. Dies wird vorteilhafterweise mit der vorgeschlagenen Erfindung erreicht, insbesondere durch die Verwendung einer "sicheren" Datenübertragung innerhalb des Systems und das "sichere" Zusammenwirken der Sicherheitseinrichtung mit den Erfassungseinrichtungen. Die sichere, d.h. FIPS-zertifizierte Übertragung von Daten innerhalb des Systems, stellt einen besonderen Vorteil der vorliegenden Erfindung dar.

Es ist im Sinne der Erfindung insbesondere bevorzugt, dass das Zusammenwirken der Systemkomponenten im Kontext der vorgeschlagenen Erfindung intelligent, d.h. smart, erfolgt. Die Begriffe "intelligent" und "smart" werden im Sinne der Erfindung synonym benutzt und werden im Sinne der Erfindung vorzugsweise wie folgt verstanden:
Bei herkömmlichen Systemen, die aus dem Stand der Technik bekannt sind, wird häufig mit festen Grenz- oder Schwellwerten, die hinsichtlich der Zustands- und/oder Betriebsparameter festgelegt sind, gearbeitet. Beispielsweise kann vorgesehen sein, dass in einem Gebäudelüftungssystem eine Klimaanlage bei Temperaturen von über 20 °C zu arbeiten beginnt. In einem System, das im Sinne der Erfindung als "intelligent" oder "smart" bezeichnet wird, wird die Funktion des Systems nicht oder nicht nur von festen oder vorgegeben Grenz- oder Schwellwerten bestimmt, sondern das smarte System ist vorzugsweise in der Lage, Wechselwirkungen zwischen den vorzugsweise von außen auf das System einwirkenden Zustandsparametern und den innerhalb des Systems herrschenden Betriebsparametern zu berücksichtigen. Wenn in dem obigen Beispiel die Erfassungseinrichtungen des Systems feststellen, dass in dem Raum, der als Reinraum betrieben werden soll, eine niedrige Temperatur herrscht, ist die Sicherheitseinrichtung vorzugsweise dazu eingerichtet, zu erkennen, dass die niedrige Umgebungstemperatur Auswirkungen auf die Luftfeuchte in dem Raum hat, so dass andere Grenzwerte für den Betrieb der Reinraumlüftung gelten können als bei hohen Temperaturen.

Wenn das vorgeschlagene System in einem Gebäude-Lüftungs- und Klimasystem eingesetzt wird, können beispielsweise Zusammenhänge zwischen Temperatur, Sonneneinstrahlung, Luftdruck und/oder Luftfeuchte als Zustandsparameter auf der einen Seite und Verschmutzungsgrad einer Filtereinrichtung oder Flüssigkeitsmenge in einer Raumbefeuchtungseinrichtung als Betriebsparameter auf der anderen Seite zueinander in Relation gesetzt werden. Dadurch wird es vorzugsweise möglich, dass das vorgeschlagene System in der Lage ist, Verbräuche innerhalb des Systems in Abhängigkeit von äußerlichen Zustandsparametern zu ermitteln, wobei die äußeren Zustandsparametern vorzugsweise mit den Betriebsparametern des Systems - ähnlich wie kommunizierende Röhren - in Wechselwirkung stehen. Mögliche Relationen und Abhängigkeiten zwischen den vorzugsweise systeminternen Betriebsparametern und den Zustandsparametern können beispielsweise in der Sicherheitseinrichtung des Systems beziehungsweise in einem Speichermedium innerhalb des Systems und/oder eine Datenbank abgelegt sein, wobei die Datenbank beispielsweise lokal Bestandteil des Systems sein kann oder wobei ein Remotezugriff auf eine externe Datenbank möglich sein kann. Es ist im Sinne der Erfindung bevorzugt, dass ein Bezahlsystem, bei dem Wechselwirkungen oder Relationen zwischen Betriebs- und Zustandsparametern bei der Abrechnung von Leistungen berücksichtigt werden können, als intelligent oder smart bezeichnet wird.

Es ist im Sinne der Erfindung bevorzugt, dass das vorgeschlagene Bezahlsystem beziehungsweise das vorgeschlagene Bezahlverfahren zusammenwirken kann mit anderen loT-Systemen oder loT-Verfahren, wie zum Beispiel Autorisierungs- und/oder Protokollierungssystemen oder -verfahren. Dadurch werden die vielfältigen Einsatzmöglichkeiten der Erfindung vorteilhafterweise weiter vergrößert.

Es ist im Sinne der Erfindung bevorzugt, dass das Sicherheitsmodul, das vorzugsweise auch als Sicherheitseinrichtung bezeichnet werden kann, dazu eingerichtet ist, ein internes Guthaben zu halten oder zu dekrementieren, d.h. um einen bestimmten Wert zu verringern. Der Begriff des Zustandsparameters bezeichnet im Sinne der Erfindung bevorzugt einen ein- oder mehrdimensionalen Zustandsvektor innerhalb eines Vektorraums.

Es ist im Sinne der Erfindung bevorzugt, dass eine Vorrichtung zumindest teilweise oder komplett mit dem Zustandsparameter beschrieben werden kann. Ebenso kann bevorzugt sein, dass eine Vorrichtung zumindest teilweise oder komplett anhand des Betriebsparameters beschrieben werden kann. Bei der Vorrichtung kann es sich bevorzugt um eine Komponente eines Bezahlsystems handeln, wobei das hier vorgeschlagene System vorzugsweise auch als Bezahlsystem bezeichnet werden kann. Das vorgeschlagene System umfasst mindestens je eine Systemkomponente, eine Erfassungseinrichtung und ein Sicherheitsmodul, wobei die Erfassungseinrichtungen vorzugsweise den Systemkomponenten zugeordnet sind. Es kann im Sinne der Erfindung bevorzugt sein, dass jeder Systemkomponente einer Erfassungsvorrichtung zugeordnet ist, es kann aber ebenso bevorzugt sein, dass jede Systemkomponente mehr als einer Erfassungseinrichtung zugeordnet ist.

Vorzugsweise generiert jede Erfassungseinrichtung eine Erfassungsinformation, so dass die Anzahl der Erfassungseinrichtungen der Anzahl der Erfassungsinformationen entspricht. Wenn das vorgeschlagene Bezahlsystem beispielsweise drei Erfassungseinrichtungen umfasst, werden durch das System vorteilhafterweise eine erste, zweite und dritte Erfassungsinformation erzeugt.

Die Erfassungsinformation wird vorzugsweise auch als Erfassungswert bezeichnet, wobei die Begriffe synonym verwendet werden. Das Bezahlsystem und das vorgeschlagene Bezahlverfahren werden im Folgenden detaillierter beschrieben, wobei die Formulierung "Erfassungswert" oder "Erfassungsinformation" vorzugsweise für "mindestens einen Erfassungswert" beziehungsweise "mindestens eine Erfassungsinformation" steht. Es ist im Sinne der Erfindung bevorzugt, dass die zweite, dritte und jede weitere Erfassungsinformation als "weitere Erfassungsinformationen" bezeichnet werden, wobei die weiteren Erfassungsinformationen vorzugsweise analog verarbeitet und behandelt werden wie die erste Erfassungsinformation, die vorzugsweise mit einer ersten Erfassungseinrichtung erzeugt wird. Auch alle im Singular genannten Komponenten, wie Systemkomponente, Erfassungseinrichtung, Sicherheitsmodul, sollen bevorzugt im Sinne von mindestens einer Systemkomponente, Erfassungseinrichtung, Sicherheitsmodul verstanden werden. ,

Es ist im Sinne der Erfindung vorgesehen, dass das Sicherheitsmodul in Abhängigkeit von dem Erfassungswert eine Abrechnungsinformation erzeugt. Bei der Abrechnungsinformation kann es sich beispielsweise um einen zu zahlenden Rechnungsbetrag handeln, wobei die abzurechnenden Leistungen im Falle der vorliegenden Erfindung vorzugsweise verbrauchsabhängig abgerechnet werden können. Es ist im Sinne der Erfindung bevorzugt, dass ein zu zahlender Rechnungsbetrag von einem internen Guthaben abgezogen werden kann, das beispielsweise innerhalb der Sicherheitseinrichtung hinterlegt sein kann oder dass dem Nutzer des Systems eine Benachrichtigung mit einer Zahlungsaufforderung zugeschickt wird. Es ist im Sinne der Erfindung darüber hinaus bevorzugt, dass das interne Guthaben, das beispielsweise im Sicherheitsmodul hinterlegt sein kann, vom Nutzer aufgeladen werden kann, beispielsweise durch Überweisungen zum Beispiel durch Verfahren des Online-Bankings. Die Begriffe Sicherheitseinrichtung und Sicherheitsmodul können bevorzugt synonym verwandt werden

Es ist im Sinne der Erfindung bevorzugt, dass die Übermittlung von Meta-Daten, die Abrechnungs- und Bezahlvorgänge betreffen, und die Ausführung konkreter Bezahltransaktionen "sicher" im Sinne der Erfindung erfolgen, d.h. unter Verwendung von FIPS-zertifizierten Vorrichtung beziehungsweise solchen Verfahren, die den hohen Anforderungen an eine FIPS-Zertifizierung genügen. Durch die Vorsehung der mit FIPS-Zertifizierung arbeitenden Sicherheitseinrichtung wird insbesondere ein technisches Problem mit technischen Mitteln gelöst, nämlich die Bereitstellung einer besonders sicheren Datenübertragung innerhalb eines Bezahlsystems und - verfahrens beziehungsweise die besonders sichere Zuordnung von Abrechnungsinformationen zu einer bestimmten Systemkomponente.

Es kann bei Vorhandensein weiterer Erfassungsvorrichtungen auch bevorzugt sein, dass das Sicherheitsmodul die Abrechnungsinformation in Abhängigkeit von dem ersten Erfassungswert erzeugt und/oder in Abhängigkeit von den weiteren Erfassungswerten.

Das vorgeschlagene Bezahlsystem umfasst eine Systemkomponente, eine Erfassungseinrichtung und ein Sicherheitsmodul, wobei die Erfassungseinrichtung dazu eingerichtet ist, einen für einen Zustandsparameter und/oder Betriebsparameter der Systemkomponente repräsentativen Erfassungswert zu erfassen und an das Sicherheitsmodul zu senden. Mit anderen Worten wird ein Erfassungswert von der Erfassungseinrichtung ermittelt und/oder erfasst und an das Sicherheitsmodul weitergeleitet. Es ist im Sinne der Erfindung bevorzugt, dass der Erfassungswert einen Zustands- und/oder Betriebsparameter der Systemkomponente beschreibt beziehungsweise diesen Zustands- oder Betriebsparameter repräsentiert. Der Begriff des Zustandsparameters bezeichnet im Sinne der Erfindung bevorzugt einen ein- oder mehrdimensionalen Zustandsvektor innerhalb eines Vektorraums, wobei ein Zustandsvektor vorzugsweise dazu eingerichtet ist, eine oder mehrere Eigenschaften einer Systemkomponente oder bevorzugt ihrer Betriebsparameter zu beschreiben, dessen Vektorform bevorzugt ebenfalls als Zustandsvektor bezeichnet wird. Beispielhaft können die Zustandsparameter zur Steuerung eines Reinraumes Luftfeuchte, -temperatur und -druck sein, die einen entsprechenden 3-dimensionalen Vektorraum aufspannen.

Es ist im Sinne der Erfindung bevorzugt, dass ein eindimensionaler Zustandsvektor zur Beschreibung einer Eigenschaft einer Systemkomponente verwendet werden kann, während ein mehrdimensionaler Zustandsvektor mehrere Eigenschaften einer technischen Vorrichtung beschreiben kann.

Analoge Überlegungen gelten vorzugsweise für einen Zustandsvektor, welcher Betriebsparameter beschreibt.

Es ist im Sinne der Erfindung bevorzugt, dass der Erfassungswert ein Betriebsparameter der Systemkomponente ist, wobei der Betriebsparameter ausgewählt ist aus einer Gruppe umfassend (Betriebs-) Temperatur, (Betriebs-) Druck, Betriebsmittel-Füllstand, Betriebsmittel-Durchsatz, Betriebsmittel-Qualitätswert, Emission und/oder Schadstoffabgabe. Ebenso kann bevorzugt sein, dass der Erfassungswert ein Zustandsparameter ist, wobei der Zustandsparameter ausgesucht ist aus der Gruppe umfassend Temperatur, Sonneneinstrahlung, (Luft-) Druck, (Luft-) Feuchtigkeit. Bei der Systemkomponente kann es sich vorzugsweise um eine technische Vorrichtung oder ein technisches Gerät handeln. Das Gerät selbst, ein Bereich innerhalb des Geräts oder ein Objekt, das mit dem Gerät verarbeitet wird, kann eine bestimmte Temperatur aufweisen, wobei diese Temperatur ein Beispiel für einen Betriebsparameter und/oder einen Zustandsparameter der Systemkomponente darstellen kann, je nachdem, ob es sich um eine interne oder eine externe Größe handelt. Wenn die Systemkomponente beispielsweise von einer Frankiermaschine gebildet wird, die beispielsweise eine Druckeinheit umfasst, die zum Bedrucken von Briefumschlägen eine Mindesttemperatur erreichen muss, kann die tatsächliche Temperatur der Druckeinheit einen Betriebsparameter der Systemkomponente "Frankiermaschine" sein. Es kann bevorzugt sein, dass einem Betriebsparameter und/oder einem Zustandsparameter ein oberer und/oder ein unterer Grenzwert zugeordnet ist, in deren inneren Grenzen ein Betrieb der Systemkomponente erfolgen kann beziehungsweise in deren inneren Grenzen die Systemkomponente einsatzbereit ist. Dies wird im Sinne der Erfindung vorzugsweise auch mit der Formulierung beschrieben, dass ein Grenzwert oder mehrere Grenzwerte für einen oder mehrere Betriebs- und/oder Zustandsparameter des Systems oder einer Systemkomponente eingehalten werden.

Ein weiteres Ausführungsbeispiel hierfür ist bevorzugt die Erfassung einer Abgasemission eines Fahrzeugs, welche insbesondere den Zustandsparameter der Systemkomponente Fahrzeug beschreibt und vorzugsweise durch einen Sensor für Luftverunreinigung als Erfassungseinrichtung in einen Erfassungswert überführt werden kann. In Abhängigkeit des Erfassungswerts kann dann beispielsweise eine emissionsabhängige Abrechnungsinformation für das Fahrzeug erstellt werden.

Bei dem Betriebsparameter und/oder Zustandsparameter, mit dem vorzugsweise der Zustand einer Systemkomponente beschrieben wird und der sich bevorzugt in dem Erfassungswert niederschlägt, der von der Erfassungseinrichtung der entsprechenden Systemkomponente erfasst wird, kann es sich auch um ein internes Guthaben handeln, welches vorzugsweise von dem Sicherheitsmodul verwaltet wird. Das Sicherheitsmodul kann beispielsweise Bestandteil der Systemkomponente sein. Beispielsweise kann das Sicherheitsmodul eine interne Einrichtung der Systemkomponente "Frankiermaschine" bilden. Die Frankiermaschine kann mit einem Guthaben aufgeladen sein, wobei das Guthaben vorzugsweise von einem Nutzer oder Betreiber auf die Frankiermaschine geladen wird, um das Guthaben zum Frankieren von Briefsendungen zu verwenden.

Beispielsweise kann in der Frankiermaschine ein Guthabenwert gespeichert sein, der einem Geldbetrag entspricht, mit dem ein Nutzer eine Frankiermaschine aufgeladen hat, um damit seine täglich ausgehende Post zu frankieren. Wenn nun ein Briefumschlag frankiert wird, kann diesem Frankiervorgang ein Zahlenwert zugeordnet werden, je nachdem welches Postprodukt für die Frankierung des Briefumschlags ausgewählt wurde. Hierbei kann es sich beispielsweise um einen Portobetrag für einen Standardbrief, einen Maxibrief oder ein Einschreiben handeln, ohne darauf beschränkt zu sein. Der in der Frankiermaschine gespeicherte Guthabenwert wird, ausgelöst durch den Frankierungsvorgang, um den Zahlenwert, der dem Postprodukt entspricht oder diesem zugeordnet ist, vermindert. Eine solche Verminderung wird im Sinne der Erfindung bevorzugt als Dekrementierung des Guthabens bezeichnet.

Die Frankiermaschine kann vorzugsweise ein Mainboard, ein Drucksystem zur Herausgabe beziehungsweise zum Drucken von Briefsendungen, sowie ein Display und mechanische Vorrichtungen zur Beförderung von Umschlägen oder Etikettenstreifen aufweisen. Auf dem Mainboard der Frankiermaschine können verschiedene Softwareanwendungen installiert sein und betrieben werden. Es ist im Sinne der Erfindung bevorzugt, dass entsprechende Portowerte oder Portocodes direkt auf einen Briefumschlag oder einen Etikettenstreifen gedruckt werden. Das Drucken eines Portocodes auf einen Briefumschlag beziehungsweise einen Etikettenstreifen wird im Sinne der Erfindung vorzugsweise als "Erzeugung eines Abdrucks" bezeichnet. Es ist im Sinne der Erfindung bevorzugt, dass der Abdruck mit Hilfe des vorzugsweise kryptografisch arbeitenden Sicherheitsmoduls erzeugt wird.

Der Betriebsparameter der Systemkomponente, der mit dem Erfassungswert beschrieben wird, den die Erfassungseinrichtung, die der entsprechenden Systemkomponente zugeordnet ist, erfasst, kann beispielsweise auch ein Druck, ein Füllstand, ein Qualitätsparameter und/oder ein Schadstoffemissionswert sein. Wenn es sich bei der Systemkomponente, die eine Dienstleistung erbringt, beispielsweise um einen Druckluftkompressor handelt, kann der Betriebsparameter beispielsweise den Druck innerhalb des Kompressors beschreiben oder die Menge an Druckluft, die in dem Kompressor gespeichert ist, wobei diese in einer bevorzugten Ausführungsform auch einen Zustandsparameter im Sinne einer externen Größe der Systemkomponente darstellen kann. Diese Betriebsparameter und/oder Zustandsparameter können mit einer Erfassungseinrichtung, die dem Druckluftkompressor zugeordnet ist, ermittelt werden und als Erfassungswert an das Sicherheitsmodul weitergeleitet werden. Der Erfassungswert kann dann als Grundlage für die Erstellung einer Abrechnung für die verbrauchte Druckluft durch einen Abnehmer verwendet werden. Dies erfolgt im Sinne der Erfindung dadurch, dass das Sicherheitsmodul in Abhängigkeit von dem Erfassungswert eine Abrechnungsinformation erzeugt.

In einer bevorzugten Ausführungsform ist das Sicherheitsmodul dafür eingerichtet eine Vorgabeinformation zu erhalten und in Abhängigkeit von dem Erfassungswert und der Vorgabeinformation eine Abrechnungsinformation zu erzeugen.

Ein "Vorgabeinformation" meint bevorzugt eine Information, welche das System durch eine externe Quelle beispielsweise einen externen Server erhält und welche sich auf eine Abrechnung in Bezug auf einen Erfassungswert bezieht.

Beispielsweise kann es sich bei der Vorgabeinformation um eine Angabe von Abrechnungsbedingungen oder Änderungen von Abrechnungsbedingungen handeln. Insbesondere können durch die Vorgabeinformation Preise oder Preisänderungen in Bezug auf die Erstellung einer Abrechnungsinformation auf Basis des Erfassungswerts umfassen.

In Bezug auf einen beispielhaften Einsatz in einem Lüftungs- und Klimasystem können beispielsweise durch die Vorgabeinformationen die Preisrelation für eine Menge an umgesetzter Luft (Volumen) oder einem Energieverbrauch des Lüftungs- und Klimasystems geändert oder festleget werden. Bevorzugt kann dies zudem in Bezug auf Betriebs- und Zustandswerte erfolgen. Die aktualisierte Preisrelation als Vorgabeinformation kann somit wie beschrieben auch Zusammenhänge zwischen Temperatur, Sonneneinstrahlung, Luftdruck und/oder Luftfeuchte als Zustandsparameter auf der einen Seite und Verschmutzungsgrad einer Filtereinrichtung oder Flüssigkeitsmenge in einer Raumbefeuchtungseinrichtung als Betriebsparameter auf der anderen Seite zur Erstellung der Abrechnungsinformation in Relation setzen.

Hierdurch kann schnell und flexibel sowohl auf aktuelle Marktentwicklungen als auch mögliche Änderungen der Geschäftsbedingungen zwischen einem Kunden und dem Dienstleister eingegangen werden. Die Implementation von Rabatten, Stornierungen, Premiumpreisen oder Pauschalpreisen (flat-rates) kann schnell und sicher erfolgen.

Durch die Bereitstellung einer externen Vorgabeinformation und der beschriebenen Verarbeitung mittels des Sicherheitsmodules ist es vorteilhafterweise möglich auf einfache, sichere und robuste Weise auf Änderungen zu reagieren und die Abrechnungsinformation entsprechend anzupassen.

Die Bereitstellung des vorgeschlagenen Bezahlsystems und Bezahlverfahrens ist besonders deshalb vorteilhaft, weil in der Wirtschaft und in der Industrie eine Veränderung von Geschäftsmodellen zu beobachten ist. Beispielsweise wird bei der Vermietung von Druckluftkompressoren nicht mehr die Standzeit oder die Betriebsdauer des Kompressors als Rechengröße zur Ermittlung einer Leihgebühr verwendet, sondern häufig die Menge der tatsächlich durch den Kompressor abgegebenen Druckluft. Die Menge dieser Druckluft kann mit dem vorgeschlagenen System und dem vorgeschlagenen Verfahren besonders einfach erfasst, weitergeleitet, verarbeitet und abgerechnet werden. Ermöglicht wird dies insbesondere durch die Kombination der Systemeinrichtungen, wie Systemkomponente, Erfassungseinrichtung und Sicherheitsmodul, und deren funktionelles Zusammenwirken, wie es hier beschrieben wird. Insbesondere befriedigen das vorgeschlagene Bezahlsystem und das vorgeschlagene Bezahlverfahren ein technisches Bedürfnis nach unkomplizierten und besonders sicheren Bezahlverfahren und -systemen, insbesondere im gewerblichen B2B-Bereich. Ein besonderer Vorteil der Erfindung besteht darin, dass mit der Erfindung eine besonders sichere *Pay-per-Use*-Methode bereitgestellt wird, die in vielen verschiedenen technischen und wirtschaftlichen Bereichen angewendet werden kann.

Das Bezahlverfahren ist insbesondere durch die folgenden Verfahrensschritte gekennzeichnet:
a) Bereitstellung eines Systems umfassend eine Systemkomponente, eine Erfassungseinrichtung und ein Sicherheitsmodul, wobei die Systemkomponente von einem Zustandsparameter und/oder einem Betriebsparameter beschrieben wird,
b) Erfassen des für einen Zustandsparameter und/oder Betriebsparameter repräsentativen Erfassungswerts durch die Erfassungseinrichtung,
c) Übermittlung des Erfassungswerts durch die Erfassungseinrichtung an das Sicherheitsmodul,
d) Erzeugung einer Abrechnungsinformation in Abhängigkeit von dem Erfassungswert durch das Sicherheitsmodul,
wobei das Verfahren weitere optionale Verfahrensschritte umfassen kann.

Die Bereitstellung einer Systemkomponente, die von einem Zustandsparameter und/oder Betriebsparameter beschrieben wird, kann beispielsweise dadurch realisiert werden, dass eine Vorrichtung bereitgestellt wird, die eine abrechenbare Dienstleistung erbringt, wie zum Beispiel die Abgabe von Druckluft, wobei insbesondere die Menge der abgegebenen Druckluft messbar und quantifizierbar ist. Die Menge der abgegebenen Druckluft kann daher vorzugsweise als Grundlage für die Erzeugung einer Abrechnungsinformation durch das Sicherheitsmodul verwendet werden, wobei die Menge der abgegebenen Druckluft durch den Zustandsparameter und/oder den Betriebsparameter der Systemkomponente, zum Beispiel des Druckluftkompressors, beschrieben werden kann. Ein Betriebsparameter könnte dabei die Anzahl der Bewegungen einer Druckluftpumpe sein, ein Zustandsparamert z. B. direkt das Volumen der gepumpten Luft. Diesen Parametern kann durch die Erfassungseinrichtung ein Erfassungswert oder eine Erfassungsinformation zugeordnet werden, die durch die Erfassungseinrichtung an das Sicherheitsmodul weitergeleitet beziehungsweise übermittelt werden kann. Es können vorzugsweise auch beide Parameter verwendet werden, um eine fehlerhafte Abrechnung zu vermeiden und die Sicherheit zu erhöhen. Im beziehungsweise durch das Sicherheitsmodul wird dann eine Abrechnungsinformation in Abhängigkeit von dem übermittelten Erfassungswert generiert. Es ist im Sinne der Erfindung besonders bevorzugt, dass der Erfassungswert sowohl ein Betriebs- als auch einen oder Zustandsparameter der Systemkomponente ist, beziehungsweise einen solchen beschreibt.

Es ist im Sinne der Erfindung bevorzugt, dass das Sicherheitsmodul ein Hardware Security Module (HSM) umfasst oder von einem solchen gebildet wird. Das HSM kann vorzugsweise auch Bestandteilt der Systemkomponente sein. Es ist im Sinne der Erfindung bevorzugt, dass das HSM ein hardwarebasiertes, kryptografisches Modul darstellt, das vorzugsweise eine FIPS-140-2-Zertifizierung aufweist. Es ist im Sinne der Erfindung bevorzugt, dass die Formulierung, dass eine Vorrichtung sicher arbeitet, technisch bedeutet, dass die entsprechende Vorrichtung eine solche FIPS-Zertifizierung aufweist. Vorzugsweise kann ebenso gemeint sein, dass die Vorrichtung eine Public-Key-Infrastruktur umfasst oder von dieser umfasst ist. Das HSM kann von einem Einzelchipmodul, einem autonomen Multichipmodul oder einem eingebetteten Multichipmodul gebildet werden oder ein solches umfassen. Das HSM ist vorzugsweise dazu eingerichtet, Daten besonders sicher zu speichern. Insbesondere ist ein HSM dazu in der Lage, kritische Sicherheitsparameter, wie Passwörter, vertrauliche Daten oder Schlüssel zur Verschlüsselung von Daten, zu generieren, zu speichern, zu nutzen und/oder zu pflegen. Die Schlüssel können beispielsweise symmetrisch oder asymmetrisch sein. Vorteilhafterweise können HSM als kryptografische Coprozessoren eingesetzt werden. In bevorzugten Ausführungsformen kann ein HSM eine batteriebetriebene Schaltung und/oder eine Spannungsüberwachung aufweisen. Dadurch wird insbesondere die Integration oder Vorsehung einer Echtzeituhr zur korrekten Zeiterfassung und Zeitstempelung ermöglicht, wodurch beispielsweise gewährleistet werden kann, dass abgelaufene Schlüssel nicht länger genutzt werden können. Darüber hinaus kann ein HSM einen redundanten Speicher umfassen, der beispielsweise dafür genutzt werden kann, mehrere Technologien zu Erzeugung einer zusätzlichen Datensicherheit gleichzeitig zu verwenden.

Es ist im Sinne der Erfindung bevorzugt, dass ein HSM eine Kette von Zertifikaten umfasst, die vorzugsweise vor Inbetriebnahme des HSM auf die Vorrichtung geladen werden. Das HSM ist darüber hinaus dazu eingerichtet, eigene private und öffentliche Geräteschlüssel zu erzeugen. Vorzugsweise verlässt der private Schlüssel zu keinem Zeitpunkt das HSM, während der öffentliche Schlüssel nach außen abgegeben werden kann, zum Beispiel an einen externen Server zur dortigen Signierung. Im Gegenzug kann das HSM ein personalisiertes, signiertes Gerätezertifikat erhalten, mit dem das HSM die Sicherheit in einem *Internet of Things*-System (IoT) deutlich erhöhen kann. Das HSM kann dann vom externen Server als "echte" Sicherheitseinrichtung erkannt und authentifiziert werden, was insbesondere durch die Vergabe einer eindeutigen Kennung ermöglicht wird. Auf diese Weise lassen sich besonders unkompliziert authentifizierte TLS-Verbindungen herstellen (*Transport Layer Security*). Vorzugsweise wird hierzu mindestens eine dem Fachmann bekannte Public-Key-Infrastruktur verwendet.

Vorzugsweise wird die Abrechnungsinformation in Abhängigkeit von einem Vergleich des Erfassungswerts mit mindestens einem Schwellenwert erstellt, wobei es sich bevorzugt um einen Schwellenwert des Erfassungswerts handelt. Insbesondere ist es bevorzugt, dass es sich um einen oberen Schwellenwert und/oder einen unteren Schwellenwert handeln kann. Es ist im Sinne der Erfindung bevorzugt, dass der obere und untere Schwellenwert den Grenzwerten für den Betriebs- und/oder Zustandsparameter des Systems oder einer Systemkomponente entsprechen und damit den Bereich beschreiben, in dem der Betrieb des Systems oder der Systemkomponente erfolgen kann. Mit anderen Worten kann bevorzugt immer dann eine Abrechnung erfolgen, wenn die Betriebsparameter und/oder Zustandsparameter die Schwell- oder Grenzwerte überschreiten, die einen zulässigen Betrieb des Systems oder einer Systemkomponente erlauben.

In einer weiteren bevorzugten Ausführungsform der Erfindung ist das Sicherheitsmodul dazu eingerichtet, die Erfassungsinformation beziehungsweise den Erfassungswert zu verifizieren. Das wird bevorzugt durch eine Verschlüsselung der Erfassungsinformation vor der Übertragung zum Sicherheitsmodul ermöglicht. Das Sicherheitsmodul nimmt einen Vergleich der verschlüsselten Erfassungsinformation mit dem eigenen privaten Schlüssel vor und kann so die Echtheit der Erfassungsinformation überprüfen. Ebenso kann es bevorzugt sein, dass eine digitale Signatur furch die Erfassungseinrichtung, vorzugsweise mit Hilfe des privaten Schlüssels vorgenommen wird, welche durch das Sicherheitsmodul verifiziert und/oder authentifiziert werden kann, z. B. durch den mit dem privaten Schlüssel assoziierten öffentlichen Schlüssel.

Es ist im Sinne der Erfindung bevorzugt, dass das Sicherheitsmodul dazu eingerichtet ist, die Erfassungsinformation und/oder die Abrechnungsinformation mit kryptografischen Mitteln abzusichern. Diese Absicherung kann beispielsweise durch Signieren und/oder Verschlüsseln der Erfassungsinformation und/oder der Abrechnungsinformation erfolgen. Mit anderen Worten ist es im Sinne der Erfindung bevorzugt, dass das Sicherheitsmodul dazu eingerichtet ist, die Erfassungsinformation und/oder die Abrechnungsinformation mit kryptografischen Mitteln abzusichern. Dies kann beispielsweise durch eine vorzugsweise digitale Signierung der Erfassungsinformation und/oder der Abrechnungsinformation erfolgen. Vorzugsweise verfügt das Sicherheitsmodul über kryptografische Fähigkeiten, die bei der Erzeugung der digitalen Signatur verwendet werden, um eine Verschlüsselung der übermittelten Informationen zu erreichen oder zu verbessern. Vorzugsweise umfasst das Sicherheitsmodul dazu kryptografische Mittel, beispielsweise einen Prozessor mit hoher Rechenleistung, mit deren Hilfe Informationen, Nachrichten und/oder Transaktionen im vorgeschlagenen System verschlüsselt übermittelt und/oder signiert werden können. Vorzugsweise ist das Sicherheitsmodul Teil einer Public-Key-Infrastruktur.

In einer weiteren bevorzugten Ausführungsform der Erfindung umfasst das Sicherheitsmodul eine Speichereinrichtung, wobei die Erfassungsinformation und/oder die Abrechnungsinformation in der Speichereinrichtung abspeicherbar sind. Dadurch können die abgespeicherten Informationen zu einem späteren Zeitpunkt für andere Zwecke verwendet oder ausgelesen oder einem bestimmten Nutzerprofil zugeordnet werden. Es kann im Sinne der Erfindung bevorzugt sein, die Abrechnungsinformationen lokal zu speichern oder remote auf die Abrechnungsinformationen zuzugreifen. Die lokale Speicherung der Abrechnungsinformationen innerhalb des Systems, beispielsweise an dem Ort, wo die Daten erzeugt und/oder erhoben werden, ermöglicht eine Vorfilterung der Daten, so dass beispielsweise nicht mehr alle Daten oder Datensätze von der Erfassungseinrichtung an die Sicherheitseinrichtung übermittelt werden müssen, sondern lediglich eine deutlich geringere Datenmenge. Dadurch, dass insgesamt weniger Daten übertragen werden müssen, werden Übertragungsressourcen eingespart und die Übertragung der relevanten Daten kann schneller und weniger aufwändig erfolgen.

Es kann im Sinne der Erfindung auch bevorzugt sein, dass das Sicherheitsmodul dazu eingerichtet ist, die Erfassungsinformation und/oder die Abrechnungsinformation in einer Cloud abzuspeichern. Dadurch kann auf die Vorsehung eines Speicherplatzes innerhalb des Sicherheitsmoduls verzichtet werden, wodurch Platz gespart wird beziehungsweise ein besonders raumsparendes Sicherheitsmodul bereitgestellt werden kann. Wenn die Daten in einer Cloud abgespeichert werden, können die Daten verschiedener Systeme beziehungsweise verschiedener Systemkomponenten miteinander verglichen werden, um beispielsweise im Rahmen eines Benchmarking-Prozesses Durchschnittswerte beziehungsweise Abweichungen zu ermitteln beziehungsweise Systeme und Systemkomponenten zu identifizieren, die "im Soll" oder beispielsweise mit einem besonders hohen Verbrauch arbeiten. Diese Daten können dann vorteilhafterweise im Rahmen einer *predictive maintenance* oder einer Fernwartung eingesetzt werden, um den Betrieb eines Systems oder einer Anlage zu optimieren.

Es ist im Sinne der Erfindung bevorzugt, dass das Sicherheitsmodul dazu eingerichtet ist, eine bevorzugt kryptografisch sichere Verknüpfung herzustellen zwischen der Erfassungsinformation und/oder der Abrechnungsinformation auf der einen Seite und einer ID der Systemkomponente, einer ID der Erfassungseinrichtung, einer ID des Sicherheitsmoduls und/oder einem Zeitstempel auf der anderen Seite. Mit anderen Worten kann es im Sinne der Erfindung bevorzugt sein, eine besonders sichere Verknüpfung herzustellen zwischen
- der Erfassungsinformation und einer ID der Systemkomponente,
- der Erfassungsinformation und einer ID der Erfassungseinrichtung,
- der Erfassungsinformation und einer ID des Sicherheitsmoduls,
- der Erfassungsinformation und einem Zeitstempel,
- der Abrechnungsinformation und der ID der Systemkomponente,
- der Abrechnungsinformation und der ID der Erfassungseinrichtung,
- der Abrechnungsinformation und der ID des Sicherheitsmoduls und/oder
- der Abrechnungsinformation und dem Zeitstempel.

Insbesondere erlauben das vorgeschlagene Bezahlsystem und das vorgeschlagene Bezahlverfahren eine eindeutige Zuordnung von Kosten zu einer bestimmten Systemkomponente beziehungsweise einem bestimmten Kostenverursacher. Damit ermöglicht die Erfindung eine verbesserte Datenweiterverarbeitung, beispielsweise indem Abrechnungsinformationen besonders einfach und unkompliziert einer bestimmten Kostenstelle zugeordnet werden können oder dass in einem technischen Betrieb unzweifelhaft und nachvollziehbar transparent gemacht werden, welche Anlagen oder Systemkomponenten wirtschaftlich beziehungsweise mit einem durchschnittlichen Verbrauch arbeiten und welche anderen Systemkomponenten dies gegebenenfalls nicht tun. Die Merkmale des vorgeschlagenen Systems und die Schritte des vorgeschlagenen Verfahrens ermöglichen vorzugsweise eine im Sinne der Erfindung sichere Übertragung und Zuordnung von Daten, die insbesondere sicher gegenüber Manipulationen oder Missbrauch sind. Dadurch steigt die Akzeptanz der vorgeschlagenen Erfindung und das Vertrauen in die Bezahlsysteme und - verfahren. Mit einer bevorzugt kryptografisch sicheren Verknüpfung ist insbesondere gemeint, eine FIPS zertifizierte Sicherheit der Verknüpfung anzuwenden. Insbesondere kann des Weiteren gemeint sein, eine Public-Key-Infrastruktur zu verwenden, welche hohen Sicherheitsanforderungen genügt und beispielsweise FIPS zertifiziert ist.

Die Erfindung wird anhand der nachfolgenden Figuren näher beschrieben. Es wird angemerkt, dass die Zeichnungen lediglich beispielhaft der Klarstellung der Erfindung dienen und keinen einschränkenden Charakter haben.

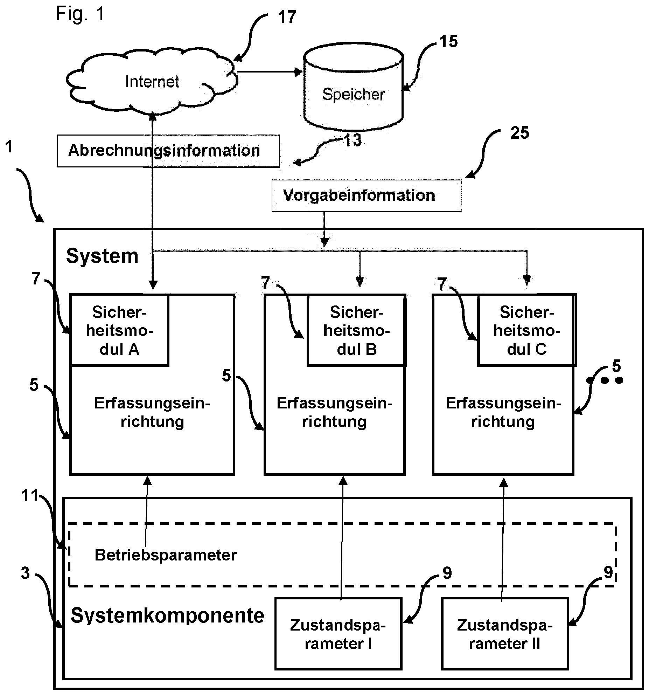

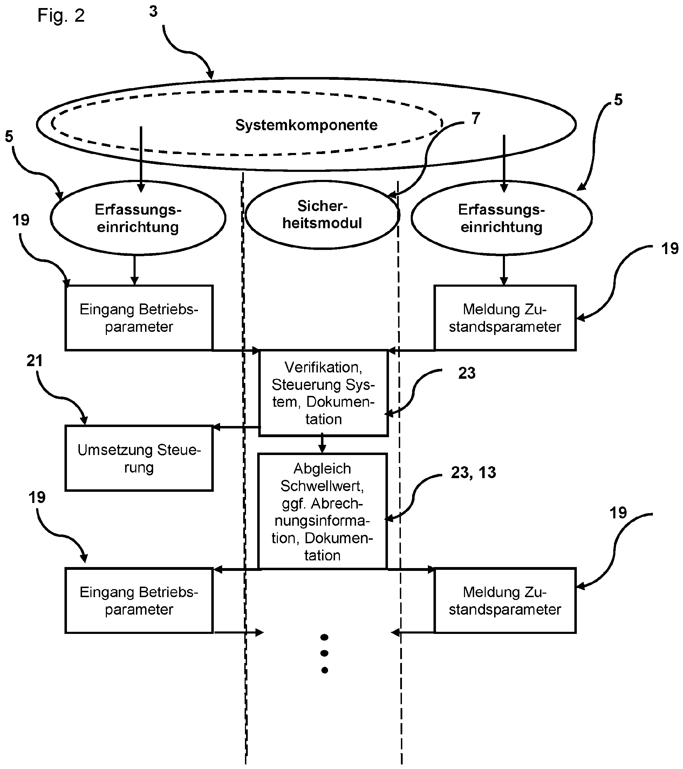

- Figuren 1 und 2:: Schaubilder zur Veranschaulichung der Erfindung

Figur 1 zeigt schematisch ein System **1** zur Bezahlung von Dienstleistungen, dass eine Systemkomponente **3**, eine Erfassungseinrichtung **5** und ein Sicherheitsmodul **7** umfasst. Die Systemkomponente wird sowohl durch einen Betriebsparameter **11** charakterisiert, der eine interne Größe der Systemkomponente **3** beschreibt, welche bevorzugt für den Betriebszustand aussagekräftig ist, als auch im vorliegenden Beispiels zwei Zustandsparameter **9**, die bevorzugt externe an der Systemkomponente **3** anliegende Größen beschreiben. Die Größen, sowohl Betriebs- **11** als auch Zustandsparameter **9**, können durch einen repräsentativen Erfassungswert **19** beschrieben werden, welcher durch die Erfassungseinrichtung **5** erfasst wird. Dabei erstellt das Sicherheitsmodul **7** in Abhängigkeit von dem Erfassungswert **19** eine Abrechnungsinformation **13**. Hierbei kann es bevorzugt sein, dass dem Sicherheitsmodul **7** eine Vorgabeinformation **25** bereitgestellt wird, sodass die Abrechnungsinformation **13** auf Basis des Erfassungswertes **19** und der Vorgabeinformation **25** erstellt wird. Die Abrechnungsinformation **13** wiederum kann, vorzugsweise in Verbindung mit der Erfassungsinformation, in einer Speichereinrichtung (kurz: Speicher) **15** abgespeichert werden. Die Speichereinrichtung **15** kann auch in einem Netzwerk, z.B. dem Internet **17** vorliegen, wobei die Speicherung vorzugsweise in einer Cloud vorgenommen wird. Insbesondere die Kommunikation im Netzwerk sollte durch kryptografische Mittel, z. B. durch Verwendung einer Public-Key-Infrastruktur und/oder einer Blockchain, abgesichert sein. Hierzu kann beispielsweise ein Sicherheitsmodul **7** in Form eines HSM verwendet werden.

Figur 2 stellt schematisch einen beispielhaften Prozessablauf im System **1** dar. Dabei kann der Betriebsparameter **11** als interne Größe der Systemkomponente **3** als auch der Zustandsparameter **9** als externe Größe durch die Erfassungseinrichtung **5** erfasst werden, welche basierend auf diesen Größen jeweils einen repräsentativen Erfassungswert **19** erstellt. Dieser wird dem Sicherheitsmodul **7** überstellt, wo außer einer Erzeugung von einer Abrechnungsinformation **13** bevorzugt weitere Prozess-Schritte **23** des Sicherheitsmoduls **7** abhängig vom Erfassungswert **19** vorgenommen werden können. Beispielsweise kann eine Verifikation (bzw. Verifizierung) des Erfassungswerts **19** vorgenommen werden. Dieser Prozess-Schritt umfasst bevorzugt die Sicherstellung, dass der Erfassungswert von einer zuvor autorisierten Erfassungseinrichtung **5** überstellt wurde. Beispielsweise kann dies durch die in einem Public-Key-Verfahren übliche Authentifizierung erfolgen, z. B. durch die Verwendung digitaler Signaturen und/oder Zertifikate. Bevorzugt nach Vornahme der Verifizierung wird vorteilhafterweise vom Sicherheitsmodul eine Steuerung freigegeben, welche bspw. eine Steuerung der Systemkomponente **3** auslöst. Alle stattfindenden Prozesse können bevorzugt ebenfalls dokumentiert werden. Als nächster Prozess-Schritt **23**, welcher bevorzugt durch die vorigen ausgelöst wurde, kann dann eine Abrechnungsinformation **13** erstellt werden, insbesondere wenn sich dies aus dem Vergleich eines Erfassungswerts **19** mit einem Schwellwert ergibt. Dieser Prozessverlauf kann beliebig weiter fortgesetzt werden.

### Bezugszeichenliste:

- 1: System
- 3: Systemkomponente
- 5: Erfassungseinrichtung
- 7: Sicherheitsmodul
- 9: Zustandsparameter
- 11: Betriebsparameter
- 13: Abrechnungsinformation
- 15: Speicher
- 17: Internet
- 19: Erfassungswert
- 21: Steuerungsparameter
- 23: Prozess-Schritt des Sicherheitsmoduls
- 25: Vorgabeinformation

## Patentansprüche

1. System (1) zur Bezahlung von Dienstleistungen, wobei das System (1) eine Systemkomponente (3), eine Erfassungseinrichtung (5) und ein Sicherheitsmodul (7) umfasst,
wobei die Erfassungseinrichtung (5) dazu eingerichtet ist, für einen Zustandsparameter (9) und einen Betriebsparameter (11) der Systemkomponente (3) repräsentative Erfassungswerte (19) zu erfassen und an das Sicherheitsmodul (7) zu senden, wobei das Sicherheitsmodul (7) in Abhängigkeit von den Erfassungswerten (19) eine Abrechnungsinformation (11) erzeugt und
wobei der Zustandsparameter einen systemexternen Parameter beschreibt, welcher von außen auf die Systemkomponente (3) einwirkt und der Betriebsparameter einen systeminternen Parameter beschreibt, welcher einen aktuellen Zustand der Systemkomponente betrifft.

2. Verfahren zur Bezahlung von Dienstleistungen,
**umfassend die folgenden Schritte:**
a) Bereitstellung eines Systems (1) umfassend eine Systemkomponente (3), eine Erfassungseinrichtung (5) und ein Sicherheitsmodul (7), wobei die Systemkomponente (3) von einem Zustandsparameter (9) und Betriebsparameter (11) beschrieben wird,
b) Erfassen der für einen Zustandsparameter (9) und Betriebsparameter (11) repräsentativen Erfassungswerte (19) durch die Erfassungseinrichtung (5), wobei der Zustandsparameter einen systemexternen Parameter beschreibt, welcher von außen auf die Systemkomponente (3) einwirken und der Betriebsparameter einen systeminternen Parameter beschreibt, welcher einen aktuellen Zustand der Systemkomponente betrifft
c) Übermittlung der Erfassungswerte (19) durch die Erfassungseinrichtung (5) an das Sicherheitsmodul (7),
d) Erzeugung einer Abrechnungsinformation (11) in Abhängigkeit von den Erfassungswerten (19) durch das Sicherheitsmodul (7).

3. System (1) nach Anspruch 1
**dadurch gekennzeichnet, dass**
das Sicherheitsmodul (7) von einem Hardware Security Module (HSM) gebildet wird.

4. System (1) nach einem oder mehreren der Ansprüche 1 oder 3
**dadurch gekennzeichnet, dass**
der Betriebsparameter (11) ausgewählt ist aus einer Gruppe umfassend (Betriebs-) Temperatur, (Betriebs-) Druck, Betriebsmittel-Füllstand, Betriebsmittel-Durchsatz, Betriebsmittel-Qualitätswert, Emission, internes Guthaben und/oder Schadstoffabgabe.

5. System (1) nach einem oder mehreren der Ansprüche 1 oder 3 bis 4
**dadurch gekennzeichnet, dass**
der Zustandsparameter (9) ausgesucht ist aus einer Gruppe umfassend Temperatur, Sonneneinstrahlung, (Luft-) Druck, (Luft-) Feuchtigkeit und/oder Luft-Verunreinigung.

6. System (1) nach einem oder mehreren der vorherigen Ansprüche 1 oder 3 bis 5
**dadurch gekennzeichnet, dass**
bei der Erzeugung der Abrechnungsinformation Wechselwirkungen oder Relationen zwischen dem Betriebsparameter und dem Zustandsparameter berücksichtigt werden.

7. System (1) nach einem oder mehreren der Ansprüche 1 oder 3 bis 6
**dadurch gekennzeichnet, dass**
die Abrechnungsinformation (13) in Abhängigkeit von einem Vergleich des Erfassungswerts (19) mit mindestens einem Schwellenwert erstellt wird.

8. System (1) nach einem oder mehreren der Ansprüche 1 oder 3 bis 7
**dadurch gekennzeichnet, dass**
das Sicherheitsmodul (7) dafür eingerichtet ist eine Vorgabeinformation (25) zu erhalten und in Abhängigkeit von dem Erfassungswert (19) und der Vorgabeinformation (25) eine Abrechnungsinformation (13) zu erzeugen.

9. System (1) nach einem oder mehreren der Ansprüche 1 oder 3 bis 8
**dadurch gekennzeichnet, dass**
das Sicherheitsmodul (7) dazu eingerichtet ist, den Erfassungswert (19) zu verifizieren.

10. System (1) nach einem oder mehreren der Ansprüche 1 oder 3 bis 9
**dadurch gekennzeichnet, dass**
das Sicherheitsmodul (7) dazu eingerichtet ist, den Erfassungswert (19) und/oder die Abrechnungsinformation (11) mit kryptografischen Mitteln abzusichern.

11. System (1) nach einem oder mehreren der Ansprüche 1 oder 3 bis 10
**dadurch gekennzeichnet, dass**
das Sicherheitsmodul (7) eine Speichereinrichtung (15) umfasst, wobei der Erfassungswert (19) und/oder die Abrechnungsinformation (11) in der Speichereinrichtung (15) abspeicherbar sind.

12. System (1) nach einem oder mehreren der Ansprüche 1 oder 3 bis 11
**dadurch gekennzeichnet, dass**
das Sicherheitsmodul (7) dazu eingerichtet ist, den Erfassungswert (19) und/oder die Abrechnungsinformation (11) in einer Cloud abzuspeichern.

13. System (1) nach einem oder mehreren der Ansprüche 1 oder 3 bis 12
**dadurch gekennzeichnet, dass**
das Sicherheitsmodul (7) dazu eingerichtet ist, eine bevorzugt kryptografisch sichere Verknüpfung herzustellen zwischen dem Erfassungswert (19) und/oder der Abrechnungsinformation (11) auf der einen Seite und einer ID der Systemkomponente (3), einer ID der Erfassungseinrichtung (5), einer ID des Sicherheitsmoduls (7) und/oder einem Zeitstempel auf der anderen Seite.

## Claims

1. A system (1) for paying for services, the system (1) comprising a system component (3), a detection device (5), and a security module (7), wherein
the detection device (5) is adapted to detect detection values (19) representative of a status parameter (9) and an operating parameter (11) of the system component (3) and to transmit these values to the security module (7), wherein the security module (7) generates billing information (11) as a function of the detection values (19), and
the status parameter describes a system-external parameter which acts from outside on the system component (3), and the operating parameter describes a system-internal parameter which relates to a current state of the system component.

2. A method for paying for services, **comprising the following steps of:**
a) providing a system (1) comprising a system component (3), a detection device (5) and a security module (7), wherein the system component (3) is described by a status parameter (9) and an operating parameter (11);
b) detecting, by the detection device (5), the detection values (19) representative of a status parameter (9) and an operating parameter (11), wherein the status parameter describes a system-external parameter which acts from outside on the system component (3) and the operating parameter describes a system-internal parameter which relates to a current state of the system component;
c) transmitting, by the detection device (5), the detection values (19) to the security module (7);
d) generating, by the security module (7), billing information (11) as a function of the detection values (19).

3. The system (1) according to claim 1,
**characterized in that**
the security module (7) is formed by a hardware security module (HSM).

4. The system (1) according to one or more of claims 1 or 3,
**characterized in that**
the operating parameter (11) is selected from a group comprising the (operating) temperature, (operating) pressure, operating fluid level, operating fluid throughput, operating fluid quality value, emission, internal credit, and/or pollutant discharge.

5. The system (1) according to one or more of claims 1 or 3 to 4,
**characterized in that**
the status parameter (9) is selected from a group comprising temperature, solar radiation, (air) pressure, (air) humidity, and/or air pollution.

6. The system (1) according to one or more of the preceding claims 1 or 3 to 5,
**characterized in that**
interactions or relations between the operating parameter and the status parameter are taken into account when generating the billing information.

7. The system (1) according to one or more of claims 1 or 3 to 6,
**characterized in that**
the billing information (13) is generated as a function of a comparison of the detection value (19) with at least one threshold value.

8. The system (1) according to one or more of claims 1 or 3 to 7,
**characterized in that**
the security module (7) is adapted to receive default information (25) and to generate billing information (13) as a function of the detection value (19) and the default information (25) .

9. The system (1) according to any one of claims 1 or 3 to 8,
**characterized in that**
the security module (7) is adapted to verify the detection value (19).

10. The system (1) according to one or more of claims 1 or 3 to 9,
**characterized in that**
the security module (7) is adapted to secure the detection value (19) and/or the billing information (11) by cryptographic means.

11. The system (1) according to one or more of claims 1 or 3 to 10,
**characterized in that**
the security module (7) comprises a storage device (15), wherein the detection value (19) and/or the billing information (11) can be stored in the storage device (15).

12. The system (1) according to one or more of claims 1 or 3 to 11,
**characterized in that**
the security module (7) is adapted to store the detection value (19) and/or the billing information (11) in a cloud.

13. The system (1) according to one or more of claims 1 or 3 to 12,
**characterized in that**
the security module (7) is adapted to establish a preferably cryptographically secure link between the detection value (19) and/or the billing information (11) on the one hand and an ID of the system component (3), an ID of the detection device (5), an ID of the security module (7), and/or a time stamp on the other hand.

## Revendications

1. Système (1) de paiement de services, dans lequel le système (1) comprend un composant de système (3), un dispositif de détection (5) et un module de sécurité (7),
dans lequel
le dispositif de détection (5) est aménagé pour détecter des valeurs de détection (19) représentatives pour un paramètre d'état (9) et un paramètre de fonctionnement (11) du composant de système (3) et pour l'envoyer au module de sécurité (7), dans lequel le module de sécurité (7) génère une information de facturation (11) en fonction des valeurs de détection (19) et
dans lequel le paramètre d'état décrit un paramètre externe au système, lequel agit de l'extérieur sur le composant de système (3) et le paramètre de fonctionnement décrit un paramètre interne au système, lequel concerne un état actuel du composant de système.

2. Procédé de paiement de services,
**comprenant les étapes suivantes :**
a) mise à disposition d'un système (1) comprenant un composant de système (3), un dispositif de détection (5) et un module de sécurité (7), dans lequel le composant de système (3) est décrit par un paramètre d'état (9) et un paramètre de fonctionnement (11),
b) détection des valeurs de détection (19) représentatives pour un paramètre d'état (9) et un paramètre de fonctionnement (11) par le dispositif de détection (5), dans lequel le paramètre d'état décrit un paramètre externe au système, lequel agit de l'extérieur sur le composant de système (3) et le paramètre de fonctionnement décrit un paramètre interne au système, lequel concerne un état actuel du composant de système
c) transmission des valeurs de détection (19) par le dispositif de détection (5) au module de sécurité (7),
d) génération d'une information de facturation (11) en fonction des valeurs de détection (19) par le module de sécurité (7).

3. Système (1) selon la revendication 1
**caractérisé en ce que**
le module de sécurité (7) est formé par un Hardware Security Module (HSM).

4. Système (1) selon une ou plusieurs des revendications 1 ou 3
**caractérisé en ce que**
le paramètre de fonctionnement (11) est sélectionné dans un groupe comprenant la température (de fonctionnement), la pression (de fonctionnement), le niveau de remplissage des ressources, le débit des ressources, la valeur de qualité des ressources, l'émission, l'avoir interne et/ou le dégagement de substances nocives.

5. Système (1) selon une ou plusieurs des revendications 1 ou 3 à 4
**caractérisé en ce que**
le paramètre d'état (9) est choisi dans un groupe comprenant la température, le rayonnement solaire, la pression (atmosphérique), l'humidité (de l'air) et/ou la pollution de l'air.

6. Système (1) selon une ou plusieurs des revendications précédentes 1 ou 3 à 5
**caractérisé en ce que**
lors de la génération de l'information de facturation, des interactions ou relations entre le paramètre de fonctionnement et le paramètre d'état sont prises en compte.

7. Système (1) selon une ou plusieurs des revendications 1 ou 3 à 6
**caractérisé en ce que**
l'information de facturation (13) est établie en fonction d'une comparaison de la valeur de détection (19) avec au moins une valeur seuil.

8. Système (1) selon une ou plusieurs des revendications 1 ou 3 à 7
**caractérisé en ce que**
le module de sécurité (7) est aménagé pour obtenir une information de consigne (25) et pour générer une information de facturation (13) en fonction de la valeur de détection (19) et de l'information de consigne (25).

9. Système (1) selon une ou plusieurs des revendications 1 ou 3 à 8
**caractérisé en ce que**
le module de sécurité (7) est aménagé pour vérifier la valeur de détection (19).

10. Système (1) selon une ou plusieurs des revendications 1 ou 3 à 9
**caractérisé en ce que**
le module de sécurité (7) est aménagé pour sécuriser la valeur de détection (19) et/ou l'information de facturation (11) avec des moyens cryptographiques.

11. Système (1) selon une ou plusieurs des revendications 1 ou 3 à 10
**caractérisé en ce que**
le module de sécurité (7) comprend un dispositif de mémoire (15), dans lequel la valeur de détection (19) et/ou l'information de facturation (11) sont enregistrables dans le dispositif de mémoire (15).

12. Système (1) selon une ou plusieurs des revendications 1 ou 3 à 11
**caractérisé en ce que**
le module de sécurité (7) est aménagé pour enregistrer la valeur de détection (19) et/ou l'information de facturation (11) dans un nuage.

13. Système (1) selon une ou plusieurs des revendications 1 ou 3 à 12
**caractérisé en ce que**
le module de sécurité (7) est aménagé pour établir une liaison de préférence sûre du point de vue cryptographique entre la valeur de détection (19) et/ou l'information de facturation (11) d'un côté et un ID du composant de système (3), un ID du dispositif de détection (5), un ID du module de sécurité (7) et/ou un horodatage de l'autre côté.
